Europäisches Patentamt

European Patent Office

Office européen des brevets

(19)

(11) Publication number: **0 140 300**
**A2**

(12)
# EUROPEAN PATENT APPLICATION

(21) Application number: **84112595.8**

(22) Date of filing: **18.10.84**

(51) Int. Cl.⁴: **A 22 B 5/08**

(30) Priority: **21.10.83 SE 8305796**

(43) Date of publication of application:
**08.05.85 Bulletin 85/19**

(84) Designated Contracting States:
**AT BE CH DE FR GB IT LI LU NL SE**

(71) Applicant: **MEAT INDUSTRY TECHNIQUE MIT AB**
**P.O. Box 34**
**S-272 01 Simrishamn(SE)**

(72) Inventor: **Göransson, Claes Göran**
**Stora Radmansgatan 19**
**S-272 00 Simrishamn(SE)**

(74) Representative: **Asketorp, Göran P. et al,**
**Lars Holmqvist Patentbyra AB Box 4289**
**S-203 14 Malmö 4(SE)**

(54) **Method and device for scalding a carcass.**

(57) A method and a device for scalding a pig. A warm, humid airflow is directed against the carcass from below or from the sides thereof. The air is circulated by a circulation fan (9) through an inlet channel (4) against the pig body (2) to an outlet channel (5) and then to a conditioning channel (6), in which the air is heated and humidified. Sensors (13, 14) control a heating element (7) and a humidifier (8) so that the inlet air has a temperature of about 62°C and a relative humidity exceeding about 80%. The moisture is condensated against the carcass and heats is rapidly. The device is. constructed of light sandwich-elements.

*Fig 1*

1

# METHOD AND DEVICE FOR SCALDING A CARCASS

## Field of invention

The present invention relates to a method and a device for scalding a carcass.

## Prior art

Scalding is included as an essential processing element at the slaughter of pigs. There are today several different methods of scalding pigs. There could be mentioned for exampel vessel scalding, tunnel scalding and oven scalding, so called hanging scalding.

The two first-mentioned methods are in principal similar and the scalding takes place by immersing the carcass in hot water ($62^{o}$C). At hanging scalding, steam is condensed in a cooling battery to a liquid phase above the pig in order to flow over the pig body.

Several examinations have shown, over the years, that it is objectionable, from the view-point of hygiene, to scald pigs immersed in a vessel and in a tunnel. The scalding water will during the day be heavily contaminated by bacteria and an enrichment of spore-forming bacteria has also been shown in scalding vessels and scalding tunnels. It has also been emphasized that the contaminated scalding water penetrates into the lungs during the scalding process and, furthermore, is forced into the vascular system and in this way is transported into great parts of the animal body.

In order to improve the hygiene at the scalding process, the system with hanging scalding has been developed some years ago. Such equipment is today installed at slaughter houses in Sweden and at some places outside Sweden. The reason why this method has not gained any greater appreciation depends above all on the fact that the investment costs are twice as high as for vessel and tunnel scalding.

## Summary of the invention

The object of the present invention is to provide a method and a device in which the advantages of hanging scalding, from the viewpoint of hygiene, are maintained, while the investment costs are considerably reduced and are equal or less compared with vessel and tunnel scalding.

Thus, according to the invention, there is provided a method for scalding a carcass, in which a warm and humide air-flow is directed against all portions of the hanging carcass and the moisture condenses on the carcass and rapidly warms the surface thereof to a temperature sufficient for scalding. Preferably, the carcass is a pig carcass. The air has, at the time if reaches the carcass, a temperature of $62^{o}C$ and a humidity above about 80%. The air is directed towards the carcass from below or from the sides thereof. The air is circulated in a circuit, in which the air is continuously heated and humidified. The heating and moistening are controlled by a control circuit having sensors for humidity and temperature.

The invention also relates to a device for performing the above-mentioned method. The device comprises a tunnel, in which the carcass is fed from an inlet end to an outlet end, at least one inlet channel for supplying a warm, humide air-flow, and a device for guiding the air-flow against essentially the entire surface of the carcass. Furthermore, there is an outlet channel for feeding the outlet air to a conditioning channel for heating and moistening, and an circulation fan for circulating the air from the conditioning channel to the inlet channel, around the carcass to the outlet channel and back to the conditioning channel. Sensors are adapted to control, by a control device, the heating elements and the moistening device so that the air, when it reaches the carcass, has a predetermined temperature (about $62^{o}C$) and humidity (more than 80% relative humidity). The device is constructed of light sandwich-elements comprising two thin plates having a thick insulation therebetween.

0140300

## Brief Description of the Drawings

The invention is described in more details below by means of preferred embodiments of the invention by reference to the appedded drawings, in which

Fig. 1 is a cross-sectional view through a first embodiment of the plant according to the invention;

Fig. 2 is a cross-sectional plan view of the plant of Fig. 1;

Fig. 3 is a longitudinal section through the plant of Fig. 1;

Fig. 4, 5 and 6 are views similar to Figs. 1, 2 and 3 of a second embodiment of the invention.

## Detailed Description of the Preferred Embodiment

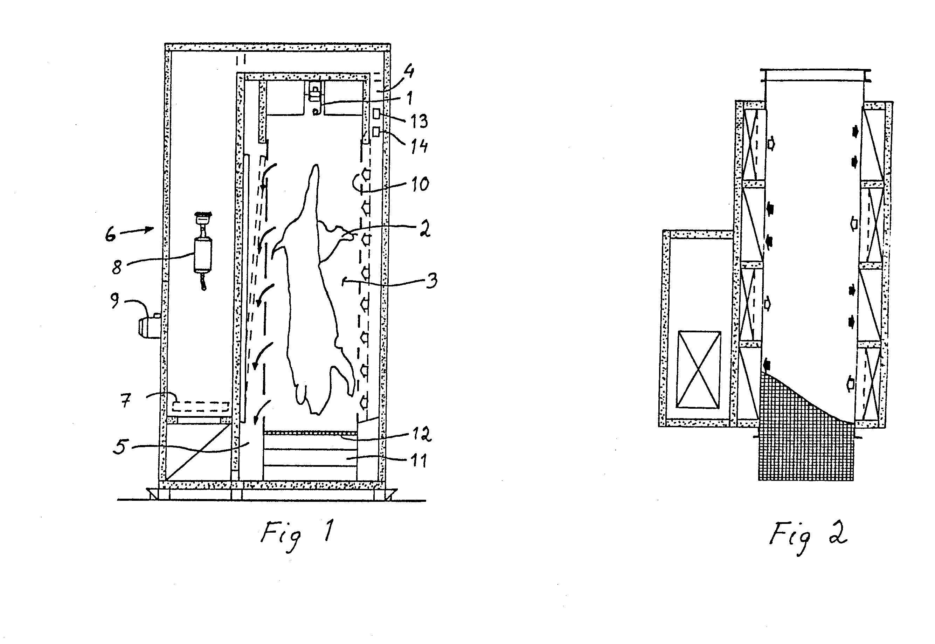

In Fig. 1, the plant according to the invention is shown in a cross-sectional view. The walls, the ceiling, the partitions etc. are constructed of sandwich plates comprising two thin outer plates surrounding a relatively thick insulating layer. Such a construction is comparatively light, and expensive steel frame constructions are not necessary. The plant does not either have heavy devices close to the ceiling as in previously known constructions.

A hang rail 1 for the carcasses 2 extends longitudinally through the plant as is shown in details in Fig. 3. The carcass 2 passes inside an essentially closed tunnel 3. Warm and humid air is blown into the tunnel from the right in Fig. 1 from an inlet channel 4. The air is controlled by openings 10 so that it strikes the carcass 2 from the side thereof along the entire height thereof. The air is sucked out to an outlet channel 5, from which the air passes to a conditioning channel 6 positioned beside the tunnel 3. The conditioning channel 6 comprises a heating element 7 and an air humidifier 8 and necessary sensors 13, 14 for temperature and relative humidity. Moreover, there is a circulation fan 9 for circulating the air.

In the heating element 7 the air is heated so that it has a temperature of 62°C when reaching the carcass. The air humidifier 8 adds steam to the air so that the relative humidity is at least about 80% when the air strikes the carcass.

When the air so heated and humidified strikes the cold carcass, the steam condensates directly on the body of the carcass, whereby the heat of condensation heats the carcass very rapidly to a temperature close to 62$^{\circ}$C.

In order to scald the pig, it is required that the bottom of the hair saccule should be heated to a temperature of 46$^{\circ}$C over the entire surface of the pig. However, the surface temperature must never exceed 62$^{\circ}$C. In order to carry out the scalding as rapidly as possible it is required that the heat transfer to the surface of the carcass is as efficient as possible. These conditions are achieved in the plant according to the invention since the humid air is simultaneously directed towards the entire surface of the carcass.

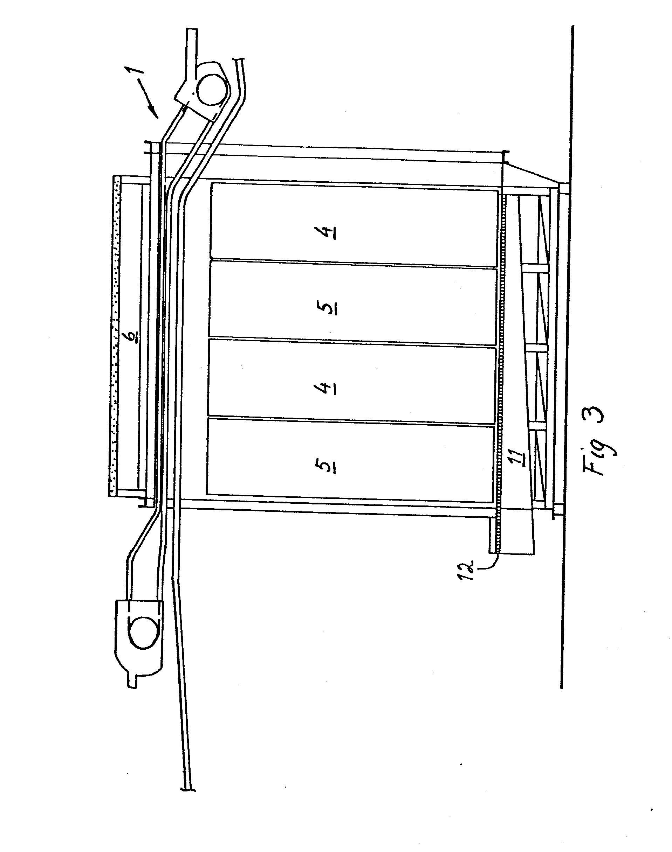

As shown in Fig. 2, there are four pairs of inlet channels 4 and outlet channels 5, each second inlet channel 4 directing the warm, humide air to each side of the pig, respectively. In this way, the entire surface of the pig is covered efficiently.

The inlet channel 4 may comprise baffles and/or openings 10 for directing the air-flows so that the entire surface of the carcass is covered. The baffles may be adapted to direct the air-flow inclined backwards and forwards in order to hit the side surfaces of the pig and inclined upwards or downwards in order to reach areas difficult to access.

Below the channel 3, there is a water collecting trough 11 covered by a grid 12. The trough 11 discharges condensed water from the plant.

The temperature and the humidity of the air is monitored by sensors 13, 14 adapted adjacent the inlet channel. Since the air is cooled somewhat during its travel from the heating element and the air humidifier 8, the air is always heated to a temperature somewhat above 62$^{\circ}$C, which however is controlled by the sensor 13 via appertaining control electronic circuits (not shown).

Experiments have shown that the treatment according to the present invention is very efficient. The scalding is very even over the entire surface. Also the portions around the head and the neck are completely scalded, which was a problem in previously known plants.

The scalding time may be reduced to 6 minutes for each pig and still an adequate scalding is achieved.

The plant is very simple to build, and the installation costs are low. The heating element 7, the humidifier 8, the circulation fan 9, the sensors 13, 14, and appertaining electronics are commonly available standard component, which gives a cheap construction.

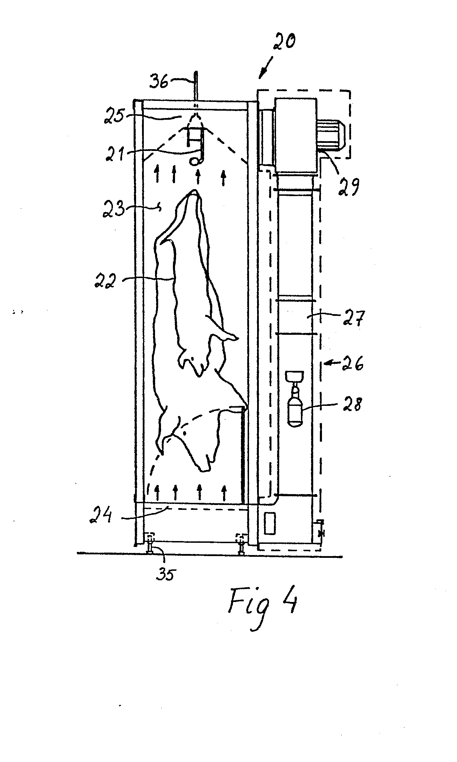

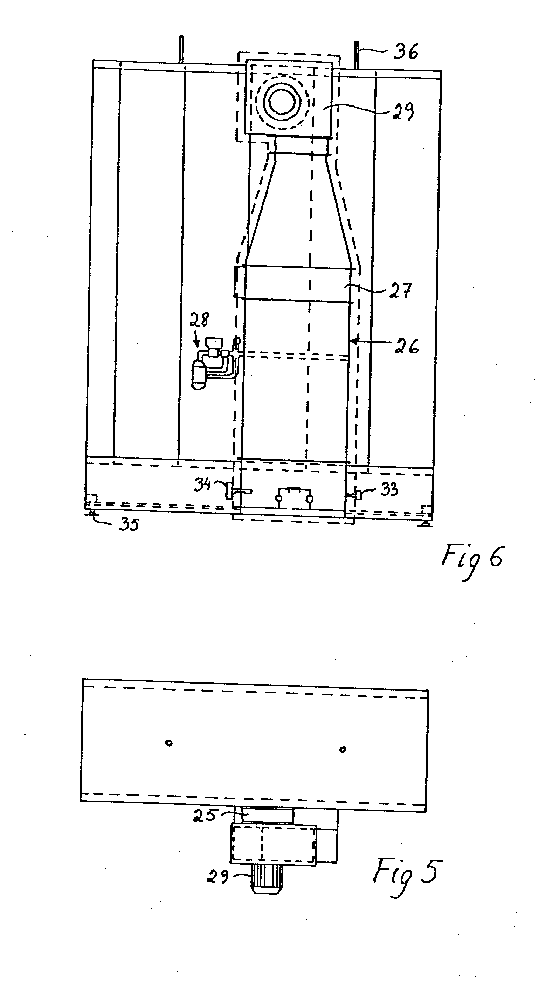

In Figs. 4 to 6 there is shown a second embodiment using the principles of the invention. In this plant 20, the air is circulated around the pig from below and is collected and sucked out close to the hang rail 21. The plant comprises a circulation fan 29 connected to an outlet channel 25. The air is expelled to heating elements 27 and passes a humidifier 28 and is discharged to the tunnel 23 through an inlet channel 24 close to the floor of tunnel 23. The warm and humide air rises around the pig body 22 and penetrates in every part thereof to effect scalding. A temperature sensor 33 and a humidity sensor 34 are placed at the inlet channel 24 in order to monitor the temperature and humidity and to control the heating elements 27 and humidifier 28.

The outlet channel 25 is placed close to the ceiling of the tunnel 23 and is generally  funnel-shaped as shown in phantom lines in Fig. 4.

The operation is exactly the same as in the first embodiment. It is noted that baffles (not shown) may be positioned at the walls of the tunnel 23 to direct the air-flow towwards places difficult to access of the carcass.

The plant 20 stands on the floor of the slaughter house by feet 35 and is connected to the ceiling of the slaughter house by pins 36.

The reason for the efficiency of the plant as verified by the experiments and the even and adequate scalding results are believed to depend on the fact that the heat exchange to the surface of the carcass takes place very efficiently by the steam in the air. Thus, the condensation heat of the steam is used for the heat exchange, which gives a big heat amount transferred per amount condensed water. The surface of the carcass is rapidly heated to the wet temperature of the humid air, which for the temperature $62^{O}C$ and the relative humidity of 80% is close to $57^{O}C$. At present it is preferred that the temperature of the air does not essential-

ly differ from 62°C. However, it is possible to use a lower temperature, whereby only the speed of the plant is lowered. It is also possible to use a somewhat higher temperature as soon as the wet temperature of the air does not exceed 62°C and it is simultaneously assured that the carcass is not dry. Thus, it is possible to use air with a temperature of 66°C and a maximum of 83% relative humidity, which corresponds to the wet temperature of 62°C. Of safety reasons it is preferred to limit the temperature to 62°C and rather rise the relative humidity as much as possible.

From that stated above it is apparent that a method and a device are provided, which fulfills the above-mentioned objects. Experiments have verified that the invention operates very satisfactorily.

Many modifications are possible within the scope of the invention. Such modifications which are obvious to a skilled person are considered within the scope of the invention. The invention is only limited by the patent claims below.

**0140300**

CLAIMS

1. A method for scalding a carcass, c h a r a c t e r i z e d
in that a warm, humid air-flow having a temperature of about 62°C
and a relative himidity exceeding about 80% is directed against all
portions of the hanging carcass, whereby the moisture condensates
on the carcass and rapidly heats the surface thereof to a temperature sufficient for scalding.

2. A method according to claim 1, c h a r a c t e r i z e d
in that the air-flow is directed towards the carcass essentially
from below or from the sides thereof.

3. A method according to claim 1 or 2, c h a r a c t e r -
i z e d  in that the air is continuously circulated in a circuit in
which the air is continuously heated and humidified.

4. A method according to claim 3, c h a r a c t e r i z e d
in that the heating and moistening is controlled by a control circuit including sensors for the humidity and the temperature.

5. A device for scalding a carcass, preferably a carcass of a
pig, c h a r a c t e r i z e d  by a channel (3), in which the
carcass is fed from an inlet end to an outlet end, at least one inlet channel (4) for the supply of a warm, humid air-flow having a
temperature of about 62°C and a relative humidity exceeding about
80%; a device for directing the air-flow against essentially the
entire surface of the carcass, whereby the moisture condensates on
the carcass and rapidly heats the surface thereof to a temperature
sufficient for scalding.

6. A device according to claim 5, c h a r a c t e r i z e d
by at least one outlet channel (5) for feeding the outlet air to a
conditioning channel (6) for heating and moistening, and a circulation fan (9) for circulating the air from the conditioning channel
(6) to the inlet channel (4), around the carcass to the outlet channel and back to the conditioning channel.

7. A device according to claim 5 or 6, c h a r a c t e r -
i z e d  by sensors (14, 15) adapted to control a heat element and
a humidifier device so that the air has said predetermined temperature and humidity when it reaches the carcass.

8. A device according to anyone of claims 5 to 7, c h a r -
a c t e r i z e d  in that the device is constructed by light sandwich elements comprising two thin plates and a thick insulating layer positioned therebetween.

0140300

Fig 2

Fig 1

Fig 3

Fig 4

36

29

27

28

26

34

33

35

*Fig 6*

25

29

*Fig 5*